# EUROPEAN PATENT SPECIFICATION

(11) **EP 4 550 551 B1**
(45) Date of publication and mention of the grant of the patent: **02.09.2026**
(21) Application number: 23835871.7
(22) Date of filing: 06.07.2023
(51) Int. Cl.: H01M 50/296, H01M 50/211, H01M 50/224, H01M 50/502, H01M 50/521, H01M 50/531, H01M 50/24, H01M 50/249, H01M 50/383, H01M 50/526, H01M 50/30, H01M 50/50, H01M 50/507

(54) **BATTERY MODULE WITH IMPROVED VENTING STRUCTURE**
BATTERIEMODUL MIT VERBESSERTER ENTLÜFTUNGSSTRUKTUR
MODULE DE BATTERIE AYANT UNE STRUCTURE DE VENTILATION AMÉLIORÉE

(30) Priority: 08.07.2022 KR 20220084568
(43) Date of publication of application: 07.05.2025
(73) Proprietor: LG Energy Solution, Ltd., Seoul 07335 (KR)
(72) Inventor: LEE, Junghoon, Daejeon 34122 (KR); JANG, Sunghwan, Daejeon 34122 (KR)
(74) Representative: Plasseraud IP
(86) International application number: PCT/KR2023/009615
(87) International publication number: WO 2024/010405

(56) References cited:
- EP-A1- 4 024 601
- KR-A- 20150 137 841
- KR-A- 20180 102 889
- KR-A- 20220 011 431
- KR-A- 20220 043 379
- US-A1- 2014 134 884
- US-A1- 2022 158 307

## Description

### [TECHNICAL FIELD]

This application claims the benefit of priority based on Korean Patent Application No. 10-2022-0084568, dated July 8, 2022.

The present invention relates to a battery module with an improved venting structure. Specifically, the present invention relates to a battery module with an improved structure that enables venting in upward direction to prevent flame and heat from spreading to other adjacent battery modules in the front and rear or left and right directions when ignited.

### [BACKGROUND ART]

Secondary batteries, which are easy to apply depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium-to-large battery module in which multiple battery cells are electrically connected is used.

Since it is desirable for medium to large-sized battery modules to be manufactured in as small a size and weight as possible, rectangular batteries and pouch-type batteries that may be stacked with high integration and have a small weight-to-capacity battery are mainly used as battery cells for medium-to-large battery modules.

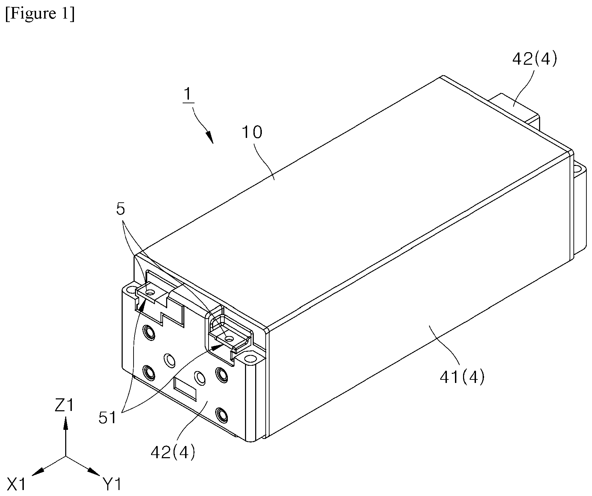

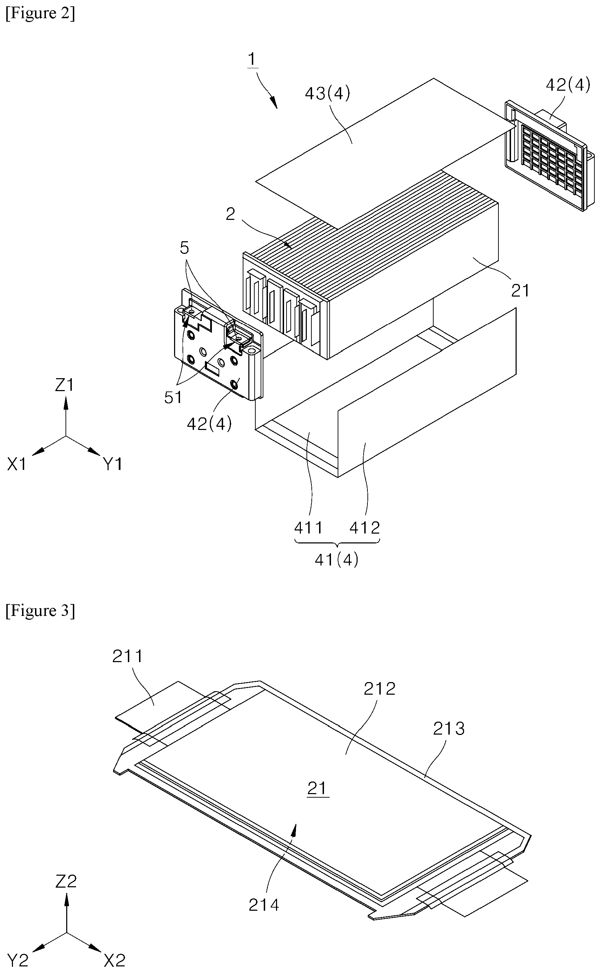

FIGS. 1 and 2 are a perspective view and an exploded perspective view illustrating a general battery module, respectively, and FIG. 3 is a perspective view illustrating a single unit of a pouch-type battery cell constituting a generic battery cell laminate. Referring to FIGS. 1 to 3, the battery module 1 may generally include: a housing 4, a battery cell laminate 2, a busbar frame 3, and a terminal 5 including a positive terminal 5a and a negative terminal 5b.

The housing 4 may include: a U frame 41 with an open front end, an open rear end and an open top; a pair of end plates 42 covering the open front end and the open rear end, respectively; and a top plate 43 that covers the open top. The components of the housing 4 may then be bonded to one another by methods such as welding to form the housing 4.

The battery cell laminate 2 may be formed by stacking a plurality of pouch-type battery cells 21, and each of the battery cells 21 may include a pouch 212 and an electrode assembly. The pouch 212 is a pouch sheet folded in half with the electrode leads 211 protruding outward from both lengthwise sides thereof X2 and with fusion-sealed sealing portions 213 provided at three sides except the folded side while accommodating the electrode assembly therein. The electrode leads 211 may include a positive lead 211a and a negative lead 211b.

The busbar frame 3 may be electrically connected to the electrode lead 211 and also to the terminal 5. The terminal 5 may be exposed to the outside through a terminal exposing portion 51 provided at the end plate 42 and electrically connected to the outside.

Meanwhile, there is a risk that the battery cell 21 may overheat and ignite due to a short circuit. When the battery cell 21 ignites, heat, flame and venting gas generated by vaporization of the electrolyte charged in the battery cell 21 may be discharged from the battery cell 21. In the from the battery cell 21, the heat, flame and venting gas are mainly discharged through the portion where the electrode lead 211 protrudes among the sealing portions 213 of the pouch 212, and, in the battery module 1, the heat, flame and venting gas are mainly discharged through the terminal exposing portion 51 provided at the end plate 42 and exposing the terminal 5, and the bonding area between the end plate 42, top plate 43, and U frame.

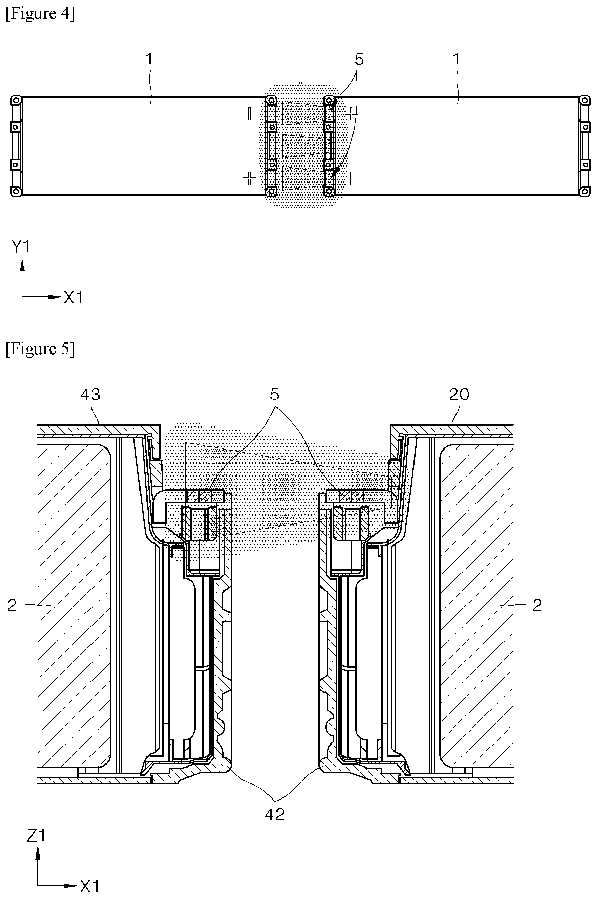

FIGS. 4 and 5 are schematic diagrams illustrating the transfer of heat energy and flame between battery modules. Referring to FIGS. 4 and 5, when the heat, flame and venting gas are discharged from the two ends of the battery module 1 in the lengthwise direction X1, there is a risk that a serial ignition may occur due to the transmission caused by the transfer of the heat energy to other adjacent battery modules 1 in the front and rear directions X1. Since such serial ignition may occur especially during accidents involving electric vehicles, it is essential to prevent such serial ignition. However, in the battery modules 1 having a structure wherein the electrode leads 211 protrude in the lengthwise direction X2 of the battery cell 21, and thus the terminal 5 is exposed at the end plate 42, the risk of such chain of ignitions is greater. Additionally, the risk is aggravated when the end plate 42 falls off from the housing 4 due to an increase in the inner pressure of the housing 4. Therefore, it is necessary to improve the structure of the battery module such that the venting of heat, flame and venting gas is not directed toward other adjacent battery modules 1.
European patent application n°4024601A1;
US patent application n°2022/0158307A1.

### [DISCLOSURE]

### [TECHNICAL PROBLEM]

In order to solve the above-described problem of prior art, it is an object of the present invention to provide a battery module with an improved structure in which heat, flame and venting gas generated during ignition of a battery cell are vented toward upward direction.

It is another object of the present invention to provide a battery module with a housing having a structure wherein end plates are prevented from falling out of the housing despite an increase in the inner pressure of the housing due to ignition of the battery cell.

It is yet another object of the present invention to provide a structure of a battery module wherein space utilization is improved and occupied volume is small compared to capacity.

It is yet another object of the present invention to provide a battery pack including a battery module with the improved structure described above and a vehicle including the battery pack.

Aspects according to the present disclosure are not limited to the above ones, and other aspects and advantages that are not mentioned above may be clearly understood from the following description and may be more clearly understood from the embodiments set forth herein. Additionally, the aspects and advantages in the present disclosure may be realized via means and combinations thereof that are described in the appended claims.

### [TECHNICAL SOLUTION]

In order to solve the above-described problems, the present invention provides a battery module structure in which the terminals protrude in upward direction.

The battery module may include a housing, a battery cell laminate, a busbar frame and a terminal.

The housing may include a U frame having with an open top, an open front end and an open rear end, a pair of end plates covering the open front end and the open rear end, and a top plate covering the open top.

The U frame may be made of metal material. However, the U frame may be made of any other material.

The U frame may be manufactured by subjecting a single metal plate to plastic deformation through a press. Alternatively, the U frame may be manufactured by bonding sidewalls and a bottom plate.

The end plate may be integrally formed with the U frame as a box frame with an open top. Alternatively, the end plates and the top plate are integrally formed as a second U frame with an open bottom, an open front end and an open rear end. As a result, the end plate may be prevented from falling off due to an increase in the inner pressure of the housing caused by the ignition of the battery module. Here, the second U frame may be manufactured by subjecting a single metal plate to plastic deformation through a press.

Components constituting the housing may be bonded to one another to form a single housing. The bonding may be accomplished by welding or by various methods such as friction fitting.

The battery cell laminate may be accommodated in the housing.

The battery cell laminate may be manufactured by stacking a plurality of battery cells in the heightwise direction Z2.

The battery cell may include an electrode assembly, electrode leads protruding from the electrode assembly, and a pouch accommodating the electrode assembly therein and made from a pouch sheet folded in half with the electrode lead 211 protruding outward and with fusion-sealed sealing portions 213 provided at three sides except the folded side.

The electrode lead may include a positive lead and a negative lead.

The electrode leads may protrude from both sides of the battery cell in the lengthwise direction X2, or may protrude from one side of the battery cell in the widthwise direction Y2. Preferably, both the positive lead and the negative lead may protrude from one widthwise side of the battery cell.

The battery cell laminate is accommodated in the housing with the one widthwise side of the battery cell facing upward direction. As a result, heat, flame and venting gas may be guided to be discharged in the upward direction toward which the electrode leads having a relatively weak seal protrude when the battery cell ignites.

The electrode leads may be electrically connected to the busbar frame. The electrode leads with the same polarity may be connected to the busbar frame or the electrode leads with different polarities may be connected to the busbar frame.

The busbar frame may have a plate shape interposed between the battery cell laminate and the pair of end plates when the electrode leads protrude from both lengthwise sides of the battery cell. Alternatively, the busbar frame may have a plate shape interposed between the battery cell laminate and the top plate when the electrode leads protrude from one widthwise side of the battery cell.

The busbar frame may be electrically connected to the terminal. Here, the terminal may include a positive terminal and a negative terminal, and accordingly, one portion of the busbar frame may be connected to the positive terminal and another portion thereof may be connected to the negative terminal.

The portion of the busbar frame connected to the electrode leads and the terminals may be made of metal, and the remaining portion may be made of synthetic resin. The synthetic resin may include a flame retardant synthetic resin.

The terminal may be exposed to the outside of the housing through a terminal exposing portion provided at the top plate of the housing open in the upward direction. As the terminal exposing portion is directed upward, heat, flame and venting gas may be guided to be discharged in the upward direction in case of ignition of the battery module.

The above-described technical solution may also be applied to a battery pack including the battery module and a vehicle including the battery pack.

### [ADVANTAGEOUS EFFECTS]

The present invention may provide a battery module with an improved structure in which heat, flame and venting gas generated in case of ignition of a battery cell are vented in upward direction through terminals and terminal exposing portions facing upward direction.

In another aspect, the present invention may provide a battery module with an improved structure where venting occurs in upward direction by electrode leads protruding in upward direction.

According to another effect of the present invention, a battery module including a housing with improved structure is provided wherein the end plates are prevented from falling out of the housing despite an increase in the inner pressure of the housing due to ignition of the battery cell by integrally forming the end plate with the top plate or the U frame.

According to yet another effect of the present invention, a structure of a battery module is provided wherein space utilization is improved and occupied volume is small compared to capacity by the electrode leads, the bus bar plates, and the terminals facing upward rather than lengthwise direction.

In another aspect, the present invention may provide a battery pack including a battery module with the improved structure described above and a vehicle including the battery pack.

In addition to the above effects, various other effects may be produced according to the preset disclosure, and description of the effects is provided with reference to each embodiment or description of effects predicted by one having ordinary skill in the art readily and the like are omitted.

### [DESCRIPTION OF DRAWINGS]

FIG. 1 is a perspective view illustrating a generic battery module.
FIG. 2 is an exploded perspective view illustrating a generic battery module.
FIG. 3 is a perspective view illustrating a single unit of a pouch-type battery cell constituting a generic battery cell laminate.
FIG. 4 is a schematic diagram illustrating the transfer of heat energy and flame between battery modules.
FIG. 5 is a schematic diagram illustrating the transfer of heat energy and flame between battery modules.
FIG. 6 is a perspective view illustrating a battery module wherein a negative terminal and a positive terminal protrude above the upper surface of the housing according to an embodiment of the present invention.
FIG. 7 is a perspective view illustrating a single unit of a pouch-type battery cell constituting a battery cell laminate included in a battery module wherein a negative lead and a positive lead face upward direction according to an embodiment of the present invention.
FIG. 8 is an exploded perspective view illustrating a battery module wherein a negative lead and a positive lead face upward direction with a plate-shaped busbar frame interposed between the battery cell laminate and the top plate according to an embodiment of the present invention.
FIG. 9 is an exploded perspective view illustrating a battery module wherein end plates and a first U frame are integrally manufactured as a box frame according to an embodiment of the present invention.
FIG. 10 is an exploded perspective view illustrating a battery module wherein an end plate and a top plate are integrally manufactured as a second U frame according to an embodiment of the present invention.
FIG. 11 is a schematic diagram illustrating a battery pack including a battery module according to the present invention.
FIG. 12 is a schematic diagram illustrating a vehicle including the battery pack of FIG. 11.

### [DESCRIPTION OF REFERENCE NUMERALS]

1: battery module
2: battery cell laminate
21: battery cell
211: electrode lead
211a: positive lead
211b: negative lead
212: pouch
213: sealing part
214: electrode assembly
3: busbar frame
4: housing
41: (first) U frame
411: bottom plate
412: side wall
42: end plate
43: top plate
44: box frame
45: second U frame
5: terminal
5a: negative terminal
5b: positive terminal
51: terminal exposing portion
P: battery pack
V: vehicle

### [SPECIFIC DETAILS FOR CARRYING OUT THE INVENTION]

The above-described aspects, features and advantages are specifically described hereafter with reference to the accompanying drawings such that one having ordinary skill in the art to which the present disclosure pertains can embody the disclosure easily. Hereafter, preferred embodiments according to the disclosure are specifically described with reference to the accompanying drawings. In the drawings, identical reference numerals can denote identical or similar components.

The terms "first", "second" and the like are used herein only to distinguish one component from another component. Thus, the components should not be limited by the terms. Certainly, a first component may be a second component, unless stated to the contrary.

Throughout the disclosure, each component may be provided as a single one or a plurality of ones, unless explicitly stated to the contrary.

When any one component is described as being "in the upper portion (or lower portion)" or "on (or under)" another component, any one component may be directly on (or under) another component, but an additional component may be interposed between any one component and another component on (or under) any one component.

When any one component is described as being "connected", "coupled", or "connected" to another component, any one component may be directly connected or coupled to another component, but an additional component may be "interposed" between the two components or the two components may be "connected", "coupled", or "connected" by an additional component.

The singular forms "a", "an" and "the" are intended to include the plural forms as well, unless explicitly indicated otherwise. It is to be understood that the terms "comprise" or "include" and the like, set forth herein, are not interpreted as necessarily including all the stated components or steps but may be interpreted as excluding some of the stated components or steps or may be interpreted as including additional components or steps.

Throughout the disclosure, the phrase "A and/or B" as used herein can denote A, B or A and B, and the phrase "C to D" can denote C or greater and D or less, unless stated to the contrary.

For convenience of description, hereinafter, with respect to the battery module, the direction that passes through two end plates of the battery module and is parallel to the bottom surface of the frame is referred to as front and rear directions or lengthwise direction X1, the direction that is normal to the plane constituted by each of the battery cells included in the battery cell laminate and is parallel to the bottom surface of the frame is referred to as left and right directions or widthwise direction Y1, and the direction that is normal to the bottom surface of the frame is referred to as vertical direction or heightwise direction Z1.

In addition, hereinafter, with respect to a battery cell, the direction that penetrates both electrode leads and is parallel to the battery cell is referred to as lengthwise direction X2, and the direction perpendicular to the lengthwise direction and parallel to the battery cell is referred to as widthwise direction Y2. The direction that is normal to the battery cell is referred to as normal direction or heightwise direction Z2.

Hereinafter, preferred embodiments of the present invention will be described with reference to the accompanying drawings.

FIGS. 1 and 2 are a perspective view and an exploded perspective view illustrating a generic battery module, respectively. Referring to FIGS. 1 and 2, the battery module 1 may include: a housing 4; a battery cell laminate 2; a busbar frame 3; and a terminal 5.

The housing 4 may include: a U frame 41 with an open front end, an open rear end and an open top; a pair of end plates 42 covering the open front end and the open rear end, respectively; and a top plate 43 covering the open top.

The U frame 41 may be made of metal material. However, the U frame 41 may be made of any material.

The U frame 41 may be manufactured from a single metal plate subjected to plastic deformation through a press. Alternatively, the U frame 41 may be manufactured by bonding side walls 412 and bottom plate 411 to one another. The bonding may be accomplished in a various ways such as welding, friction fitting or bolting.

The end plates 42 and/or the top plate 43 may be made of metal material. However, the end plates 42 and/or the top plate 43 may be made of any material.

The U frame 41, the end plates 42, and the top plate 43 may be bonded to one another to form the housing 4. The bonding may be accomplished in a various ways such as welding, friction fitting or bolting.

The battery cell laminate 2 may be formed by stacking a plurality of battery cells in the heightwise direction Z2.

FIG. 3 is a perspective view illustrating a single unit of a pouch-type battery cell constituting a generic battery cell laminate. Referring to FIG. 3, the battery cell 21 may include an electrode assembly 214, electrode lead 211 protruding from the electrode assembly 214, and a pouch 212 that accommodates the electrode assembly 214.

The pouch 212 may be a pouch sheet made of metal folded in half along an axis in the lengthwise direction X2 with the electrode assembly 214 interposed therebetween, with the electrode lead 211 protruding outward and with fusion-sealed sealing portions 213 provided at one side except the folded side in the widthwise direction and two lengthwise sides.

The electrode lead 211 may include a positive lead 211a and a negative lead 211b.

The electrode lead 211 may protrude from both sides of the battery cell 21 in the lengthwise direction X2.

The battery cell laminate 2 may be accommodated in the housing 4 with the protrude from one widthwise side of the battery cell 21. facing upward direction.

The electrode lead 211 may be electrically connected to the busbar frame 3. Here, the electrode lead 211 with the same polarity may be connected to one another or the electrode leads with different polarities may be connected to one another.

The busbar frame 3 may be electrically connected to the terminal 5.

The terminal 5 may include a positive terminal 5a and a negative terminal 5b. Accordingly, a portion of the busbar frame 3 may be connected to the positive terminal 5a, and another portion thereof may be connected to the negative terminal 5b.

The portion of the busbar frame 3 connected to the electrode lead 211 and the terminal 5 may be made of an electrically conductive material such as metal, and the rest thereof may be made of a non-electrically conductive material such as synthetic resin. For example, the rest thereof may be made of flame-retardant synthetic resin.

The terminal 5 may be exposed to the outside through a terminal exposing portion 51 provided at a portion of the housing 4 open to the outside. Here, the battery module 1 may be connected to other adjacent battery modules through the terminal 5.

FIGS. 4 and 5 are is schematic diagrams illustrating the transfer of heat energy and flame between battery modules. Referring to FIGS. 4 and 5, the battery module 1 may be arranged in a manner that the end plates 42 of the battery module 1 and other battery modules disposed in front of or behind the battery module 1 face one another. When the battery cell 21 ignites, heat, flame and venting gas are discharged, and the heat energy of the battery module 1 is transferred to the other adjacent battery module as heat, flame and venting gas move toward other adjacent battery modules, serial ignition may occur. In particular, when the electrode leads 211 protrudes in the lengthwise direction X2 of the battery cell 21, and the terminal 5 and the terminal exposing portion 51 are at the end of the battery module 1 in the lengthwise direction X1, there is a greater risk of serial ignitions like the above occurring.

Accordingly, the present invention provides a structure of a battery module wherein the terminal and terminal exposing portion face upward direction.

### [FIRST EMBODIMENT]

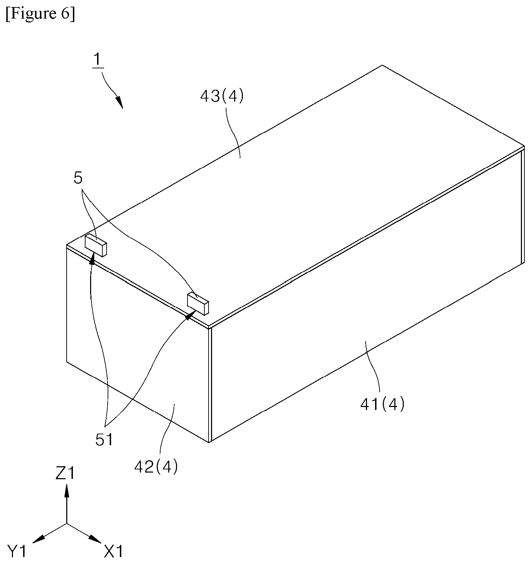

FIG. 6 is a perspective view illustrating a battery module wherein a negative terminal and a positive terminal protrude above the upper surface of the housing according to an embodiment of the present invention. Referring to FIG. 6, the terminal 5 may be exposed in the upward direction through the terminal exposing portion 51 provided at the top plate 43 of the housing 4. The terminal exposing portion 51 and the terminal 5 may be provided at one lengthwise end of the top plate 43 and arranged in aligned manner along the widthwise direction of the housing.

Accordingly, in the battery module according to this embodiment, when the battery module 1 is ignited, heat, flame and the venting gas may be guided toward the upward direction where the terminal 5 and the terminal exposing portion 51 are provided rather than toward the end plate 42 due to the end plate 42 without opening and the terminal exposing portion 51 facing the upward direction. Therefore, the risk of serial ignition occurring by transfer of heat energy to other adjacent battery modules may be reduced as heat, flame and venting gas are discharged in the upward direction rather than the front and rear directions.

### [SECOND EMBODIMENT]

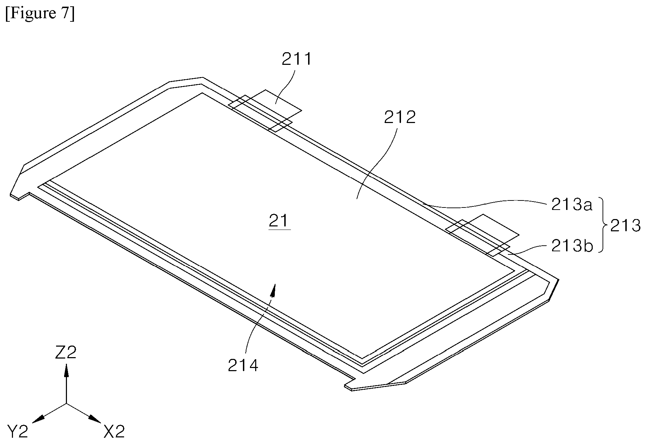

FIG. 7 is a perspective view illustrating a single unit of a pouch-type battery cell constituting a battery cell laminate included in a battery module wherein a negative lead and a positive lead face upward direction according to an embodiment of the present invention. Referring to FIG. 7, both of the positive lead 211a and the negative lead 211b of the electrode lead 211 protrudes from one widthwise side of the battery cell 21.

Accordingly, in the battery cell according to the embodiment, among the sealing portions 213, the portion at the one widthwise side of the battery cell 21 where the electrode lead 211 protrudes is released more easily than other portions when the inner pressure of the battery cell 21 increases due to heat, flame and venting gas generated in case of ignition of a battery cell such that the heat, flame and venting gas may be guided to be vented from inside the battery cell toward the one widthwise side of the battery cell 21.

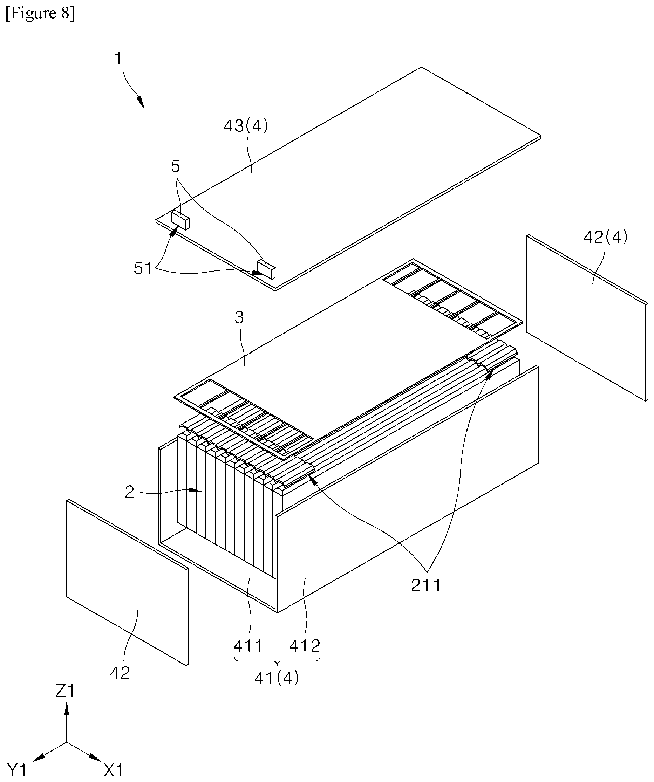

FIG. 8 is an exploded perspective view illustrating a battery module according to an embodiment of the present invention including a battery cell of FIG. 7 with a plate-shaped busbar frame interposed between a battery cell laminate and a top plate. Referring to FIG. 8, the battery cell laminate 2 having the battery cells 21 stacked therein may be accommodated in the housing 4 with one widthwise side of the battery cell 21 facing upward direction. Accordingly, the positive lead 211a and the negative lead 211b may be arranged in an aligned manner along the widthwise direction Y1 of the battery module 1 above the upper surface of the battery cell laminate 2.

A busbar frame 3 may be interposed between the battery cell laminate 2 and the top plate 43. The portion of the busbar frame 3 electrically connected to the electrode lead 211 and the terminal 5 may be made of an electrically conductive material such as metal, and the rest thereof may have a plate shape and made of a non-electrically conductive material such as synthetic resin. The synthetic resin may include of flame-retardant synthetic resin. Accordingly, the busbar frame 3 may be connected downwardly to the electrode lead 211 and upwardly to the terminal 5.

The terminal 5 may be exposed in the upward direction through the terminal exposing portion 51 provided at the top plate 43 of the housing 4. The terminal exposing portion 51 and the terminal 5 may be arranged, for example, at one lengthwise end of the top plate 43 and aligned in the widthwise direction Y1.

Accordingly, in the battery module according to this embodiment, the heat, flame and venting gas generated during ignition of the battery cell 21 are guided and exhausted in the upward direction toward which the electrode lead 211 protrudes as the seal of the portion adjacent to the lead 211, which is relatively weak among the sealing portions 213 of the battery cell 21, is released. Moreover, the terminal 5 and the terminal exposing portion 51 are provided at the top plate 43 to face the upward direction such that heat, flame and venting gas from the battery cell 21 are guided and exhausted in the upward direction of the battery module 1 through the terminal exposing portion 51. As the heat, flame and venting gas are discharged upward rather than forward and backward, the risk of serial ignition caused by the transfer of heat energy to other adjacent battery modules may be reduced.

In addition, as the electrode lead 211 faces the upward direction, the both lengthwise side surfaces of the battery cell laminate 2 are not provided with the electrode lead 211 and the busbar frame 3, and may be flat. Therefore, the space utilization of the battery module 1 may be maximized, and a battery module with a larger capacity with respect to the volume may be provided.

### [THIRD EMBODIMENT]

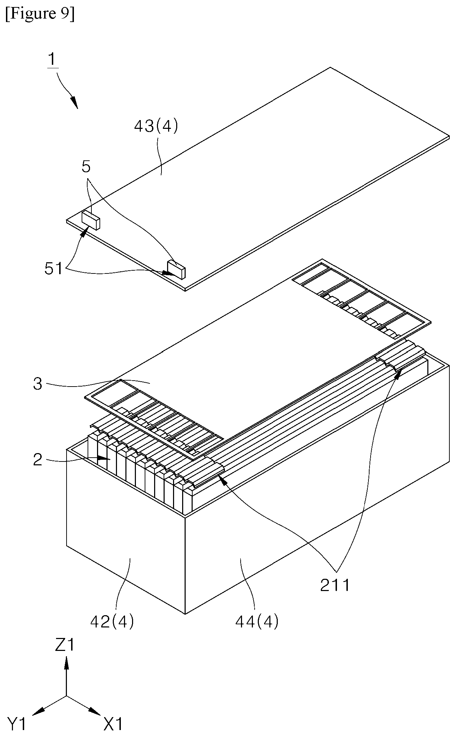

FIG. 9 is an exploded perspective view illustrating a battery module wherein the end plates and the first U frame are integrally manufactured as a box frame according to an embodiment of the present invention. Referring to FIG. 9, in addition to the second embodiment, the end plates 42 and the U frame 41 may integrally form a box frame 44 with an open top.

Such structure facilitates application since the electrode lead 211, the busbar frame 3 and the terminal 5 are provided at the top plate 43 rather than at the end plate 42. When the electrode lead 211, the busbar frame 3 and the terminal 5 are provided at the end plate 42 formed integrally with the U frame 41, difficulties in the assembly during the process of accommodating the battery cell laminate 2 having protrusions at both lengthwise sides thereof, the busbar frame 3 and the terminal 5 in the box frame 44 that has only the top portion open. However, the battery cell laminate 2 without protrusions at both sides thereof in the lengthwise and widthwise directions according to the embodiment, the busbar frame 3 and the terminal 5 may be accommodated in the box frame 44 by merely being inserted downward into the box frame 44 that has only the top portion open.

In the battery module according to this embodiment, such structure reduces the risk of the end plate 42 falling off from the housing 4 in case of ignition of the battery module 1, and the risk of debonding of the bonding area of at three sides where the end plate 42 and the U frame 41 is bonded to one another at both lengthwise sides thereof due to an increase in the inner pressure of the housing 4 is also greatly reduced. Therefore, the risk of serial ignition caused by the heat, flame and venting gas generated 4 in case of ignition of the battery module 1 being discharged to the end plate 42, and the heat, flame and venting gas may be further guided to be discharged in upward direction.

### [FOURTH EMBODIMENT]

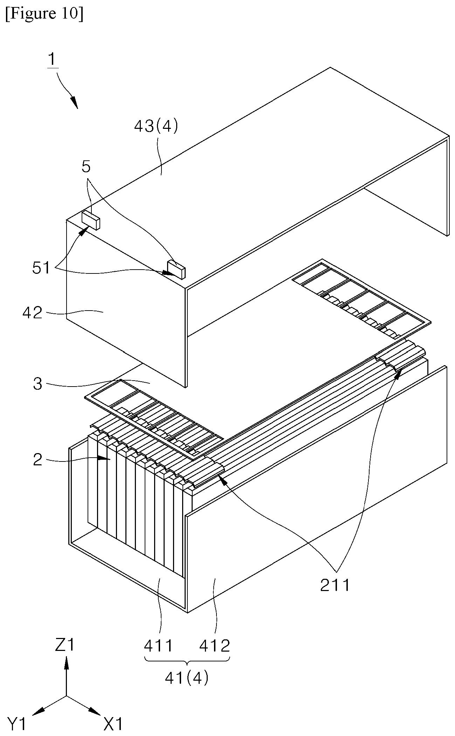

FIG. 10 is an exploded perspective view illustrating a battery module wherein an end plate and a top plate are integrally manufactured as a second U frame according to an embodiment of the present invention. Referring to FIG. 10, in addition to the second embodiment, the end plate 42 and the top plate 43 may be integrally formed as a U-shaped frame with open front end, open rear end and open bottom. Hereinafter, the U frame 41 is referred to as the first U frame 41, and the U-shaped frame integrally formed by the end plate 42 and the top plate 43 is referred to as the second U frame 45.

The second U frame 45 may be made of metal material. However, the U frame 41 may be made of any material.

The second U frame 45 may be manufactured by subjecting a single metal plate to plastic deformation through a press. Alternatively, the second U frame 45 may be manufactured by bonding the end plates 42 and the top plate 43. The bonding may be accomplished by various methods such as welding, friction fitting or bolting.

In the battery module according to the embodiment, above-described structure reduces the risk of the end plate 42 falling off from the housing 4 in case of ignition of the battery module 1, and also significantly reduces the risk of debonding of the bonding area between the end plates 42 and the top plates 43 caused by an increase in the inner pressure of the housing 4. Therefore, the risk of the heat, flame and venting gas generated in case of ignition of the battery module 1 being discharged toward the end plate 42 causing serial ignition in other adjacent battery modules is also reduced, and the heat, flame and venting gas may be further guided toward the upward direction with respect to the battery module 1.

In addition, when each of the first U frame 41 and the second U frame 45 are manufactured by subjecting a single metal plate to plastic deformation through a press, entire components of the housing 4 may be provided by only two pressing processes resulting in manufacturing advantages.

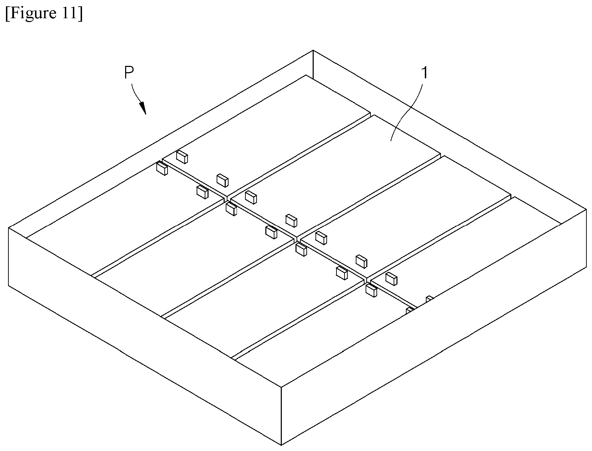

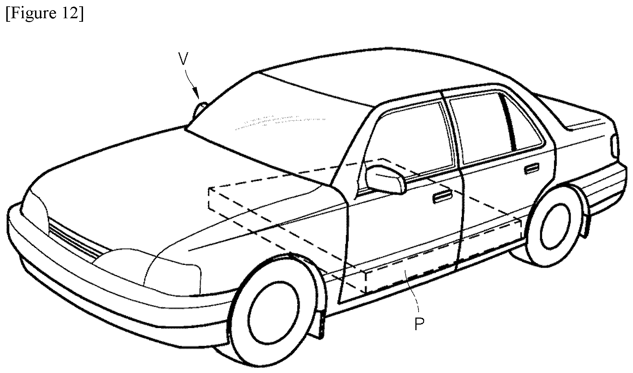

FIGS. 11 and 12 are schematic diagrams illustrating a battery pack including a battery module and a vehicle including the battery pack, respectively. Referring to FIGS. 11 and 12, the present invention may provide a battery pack P including the battery module 1 and a vehicle V having the battery pack P mounted thereon. Since manufacturing methods such as the above-described battery pack P and vehicle V are known to those skilled in the art, descriptions thereof are herein omitted.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

The embodiments are described above with reference to a number of illustrative embodiments thereof. However, embodiments are not limited to the embodiments and drawings set forth herein, and numerous other modifications and embodiments may be drawn by one skilled in the art within the technical scope of the disclosure. Further, the effects and predictable effects based on the configurations in the disclosure are to be included within the scope of the disclosure though not explicitly described in the description of the embodiments.

## Claims

1. A battery module (1) accommodated in a battery pack (P), wherein a plurality of the battery module (1) is connected to one another and arranged in parallel in the front and rear directions or left and right directions, the battery module (1) comprising:
a housing (4);
a battery cell laminate (2) accommodated in the housing (4), the battery cell comprising stacked battery cells (21);
a busbar frame (3) electrically interconnecting electrode leads (211) provided in each of the stacked battery cells (21) constituting the battery cell laminate (2);
a positive terminal (5b) and a negative terminal (5a) electrically connected to the busbar frame (3), each of the positive terminal (5b) and the negative terminal (5a) protruding above an upper surface of the housing (4); and
wherein each of the electrode leads (211) comprises a positive lead (211a) and a negative lead (211b),
the positive lead (211a) and the negative lead (211b) protrude from one widthwise side of the battery cell (21), and
the battery cell laminate (2) is accommodated in the housing (4) with the one widthwise side of the battery cell (21) facing upward direction.

2. The battery module (1) of claim 1, wherein the positive terminal (5b) and the negative terminal (5a) are provided at one lengthwise end of the upper surface of the housing (4) and arranged in aligned manner along a widthwise direction of the housing (4).

3. The battery module (1) of claim 1, wherein the busbar frame (3) has a plate shape interposed between the battery cell laminate (2) and the upper surface of the housing (4).

4. The battery module (1) of claim 3, wherein the busbar frame (3) comprises a flame-retardant synthetic resin.

5. The battery module (1) of any one of claims 1 to 4, wherein the housing (4) comprises:
a first U frame (41) having a U-shape with an open top, an open front end and an open rear end;
a pair of end plates (42) covering the open front end and the open rear end of the first U frame (41), respectively; and
a top plate (43) covering the open top of the first U frame (41).

6. The battery module (1) of claim 5, wherein the pair of end plates and the first U frame (41) are integrally manufactured as a box frame with an open top.

7. The battery module (1) of claim 5, wherein the pair of end plates and the top plate (43) are integrally manufactured as a second U frame (45) with an open bottom, an open front end and an open rear end.

8. The battery module (1) of claim 7, wherein each of the first U frame (41) and the second U frame (45) is manufactured by subjecting a single metal plate to plastic deformation through a press.

9. The battery module (1) of claim 7, wherein the first U frame (41) and the second U frame (45) are bonded to each other by welding.

10. A battery pack comprising a battery module (1) of claim 1.

11. A vehicle comprising a battery pack of claim 10.

## Patentansprüche

1. Batteriemodul (1), das in einem Batteriepack (P) untergebracht ist, wobei eine Vielzahl der Batteriemodule (1) miteinander verbunden und parallel in der Vorwärts- und Rückwärtsrichtung oder der Links- und Rechtsrichtung angeordnet ist, wobei das Batteriemodul (1) umfasst:
ein Gehäuse (4);
ein Batteriezellenlaminat (2), das in dem Gehäuse (4) untergebracht ist, wobei die Batteriezelle gestapelte Batteriezellen (21) umfasst;
einen Sammelschienenrahmen (3), der Elektrodenleiter (211), die in jeder der gestapelten Batteriezellen (21), die das Batteriezellenlaminat (2) bilden, vorgesehen sind, elektrisch miteinander verbindet;
einen positiven Anschluss (5b) und einen negativen Anschluss (5a), die elektrisch mit dem Sammelschienenrahmen (3) verbunden sind, wobei jeder des positiven Anschlusses (5b) und des negativen Anschlusses (5a) über eine obere Oberfläche des Gehäuses (4) vorstehen; und
wobei jeder der Elektrodenleiter (211) einen positiven Leiter (211a) und einen negativen Leiter (211b) umfasst,
der positive Leiter (211a) und der negative Leiter (211b) von einer Breitseite der Batteriezelle (21) vorstehen, und
das Batteriezellenlaminat (2) in dem Gehäuse (4) untergebracht ist, wobei die eine Breitseite der Batteriezelle (21) nach oben gerichtet ist.

2. Batteriemodul (1) nach Anspruch 1, wobei der positive Anschluss (5b) und der negative Anschluss (5a) an einem Längsende der oberen Oberfläche des Gehäuses (4) vorgesehen und in ausgerichteter Weise entlang einer Breitenrichtung des Gehäuses (4) angeordnet sind.

3. Batteriemodul (1) nach Anspruch 1, wobei der Sammelschienenrahmen (3) eine Plattenform aufweist, die zwischen dem Batteriezellenlaminat (2) und der oberen Oberfläche des Gehäuses (4) angeordnet ist.

4. Batteriemodul (1) nach Anspruch 3, wobei der Sammelschienenrahmen (3) ein flammhemmendes Kunstharz umfasst.

5. Batteriemodul (1) nach einem der Ansprüche 1 bis 4, wobei das Gehäuse (4) umfasst:
einen ersten U-Rahmen (41), der eine U-Form mit einer offenen Oberseite, einem offenen vorderen Ende und einem offenen hinteren Ende aufweist;
ein Paar Endplatten (42), die jeweils das offene vordere Ende und das offene hintere Ende des ersten U-Rahmens (41) abdecken; und
eine obere Platte (43), die die offene Oberseite des ersten U-Rahmens (41) abdeckt.

6. Batteriemodul (1) nach Anspruch 5, wobei das Paar Endplatten und der erste U-Rahmen (41) einstückig als ein Kastenrahmen mit einer offenen Oberseite hergestellt sind.

7. Batteriemodul (1) nach Anspruch 5, wobei das Paar Endplatten und die obere Platte (43) einstückig als ein zweiter U-Rahmen (45) mit einem offenen Boden, einem offenen vorderen Ende und einem offenen hinteren Ende hergestellt sind.

8. Batteriemodul (1) nach Anspruch 7, wobei jeder des ersten U-Rahmens (41) und des zweiten U-Rahmens (45) durch Unterziehen einer einzelnen Metallplatte einer plastischen Verformung durch eine Presse hergestellt wird.

9. Batteriemodul (1) nach Anspruch 7, wobei der erste U-Rahmen (41) und der zweite U-Rahmen (45) durch Schweißen miteinander verbunden sind.

10. Batteriepack, umfassend ein Batteriemodul (1) nach Anspruch 1.

11. Fahrzeug, umfassend ein Batteriepack nach Anspruch 10.

## Revendications

1. Module de batterie (1) logé dans un bloc-batterie (P), dans lequel une pluralité des modules de batterie (1) sont connectés les uns aux autres et agencés en parallèle dans les directions avant et arrière ou gauche et droite, le module de batterie (1) comprenant:
un boîtier (4) ;
un stratifié de cellules de batterie (2) logé dans le boîtier (4), le stratifié de cellules de batterie comprenant des cellules de batterie (21) empilées ;
un cadre de barre-bus (3) interconnectant électriquement des pattes d'électrode (211) prévues dans chacune des cellules de batterie (21) empilées constituant le stratifié de cellules de batterie (2) ;
une borne positive (5b) et une borne négative (5a) connectées électriquement au cadre de barre-bus (3), chacune de la borne positive (5b) et de la borne négative (5a) faisant saillie au-dessus d'une surface supérieure du boîtier (4) ; et
dans lequel chacune des pattes d'électrode (211) comprend une patte positive (211a) et une patte négative (211b),
la patte positive (211a) et la patte négative (211b) font saillie d'un côté selon la largeur de la cellule de batterie (21), et
le stratifié de cellules de batterie (2) est logé dans le boîtier (4) avec le coté selon la largeur de la cellule de batterie (21) orienté vers le haut.

2. Module de batterie (1) selon la revendication 1, dans lequel la borne positive (5b) et la borne négative (5a) sont prévues à une extrémité longitudinale de la surface supérieure du boîtier (4) et agencées de manière alignée selon la largeur du boîtier (4).

3. Module de batterie (1) selon la revendication 1, dans lequel le cadre de barre-bus (3) a une forme de plaque interposée entre le stratifié de cellules de batterie (2) et la surface supérieure du boîtier (4).

4. Module de batterie (1) selon la revendication 3, dans lequel le cadre de barre-bus (3) comprend une résine synthétique ignifuge.

5. Module de batterie (1) selon l'une quelconque des revendications 1 à 4, dans lequel le boîtier (4) comprend :
un premier cadre en U (41) ayant une forme en U avec un dessus ouvert, une extrémité avant ouverte et une extrémité arrière ouverte ;
une paire de plaques d'extrémité (42) recouvrant l'extrémité avant ouverte et l'extrémité arrière ouverte du premier cadre en U (41), respectivement; et
une plaque supérieure (43) recouvrant le dessus ouvert du premier cadre en U (41).

6. Module de batterie (1) selon la revendication 5, dans lequel la paire de plaques d'extrémité et le premier cadre en U (41) sont fabriqués d'un seul tenant sous la forme d'un cadre de boîte avec un dessus ouvert.

7. Module de batterie (1) selon la revendication 5, dans lequel la paire de plaques d'extrémité et la plaque supérieure (43) sont fabriquées d'un seul tenant sous la forme d'un second cadre en U (45) avec un fond ouvert, une extrémité avant ouverte et une extrémité arrière ouverte.

8. Module de batterie (1) selon la revendication 7, dans lequel chacun du premier cadre en U (41) et du second cadre en U (45) est fabriqué en soumettant une seule plaque métallique à une déformation plastique au moyen d'une presse.

9. Module de batterie (1) selon la revendication 7, dans lequel le premier cadre en U (41) et le second cadre en U (45) sont liés l'un à l'autre par soudage.

10. Bloc-batterie comprenant un module de batterie (1) selon la revendication 1.

11. Véhicule comprenant un bloc-batterie selon la revendication 10.
